Europäisches Patentamt

(19) European Patent Office

Office européen des brevets

(11) Numéro de publication: **0 035 938**
**B1**

(12) **FASCICULE DE BREVET EUROPEEN**

(45) Date de publication du fascicule du brevet:
24.10.84

(51) Int. Cl.³: **H 02 K 5/15,** H 02 K 5/04,
H 02 K 15/16

(21) Numéro de dépôt: **81400334.9**

(22) Date de dépôt: **04.03.81**

(54) Machine électrique à carcasse composite.

(30) Priorité: **11.03.80 FR 8005416**

(43) Date de publication de la demande:
**16.09.81 Bulletin 81/37**

(45) Mention de la délivrance du brevet:
**24.10.84 Bulletin 84/43**

(84) Etats contractants désignés:
**AT DE FR GB IT SE**

(56) Documents cités:
**DE - C - 542 272**
**DE - C - 818 533**
**DE - C - 824 367**
**FR - A - 1 098 720**
**FR - A - 1 215 119**
**FR - A - 1 519 914**
**FR - A - 1 547 268**
**FR - A - 2 209 239**
**FR - A - 2 368 170**
**FR - A - 2 439 496**
**US - A - 2 716 709**
**US - A - 3 422 295**
**US - A - 3 463 949**
**US - A - 3 670 405**
**US - A - 3 732 616**
**US - A - 3 794 869**

(73) Titulaire: **SOCIETE ELECTRO MECANIQUE DU NIVERNAIS SELNI, 173, boulevard Haussmann, F-75008 Paris (FR)**

(72) Inventeur: **Bourget, Jean, "THOMSON-CSF"**
**SCPI 173, bld Haussmann, F-75360 Paris Cedex 08 (FR)**
Inventeur: **Bresson, Roger, THOMSON-CSF**
**SCPI 173, bld Haussmann, F-75360 Paris Cedex 08 (FR)**

(74) Mandataire: **Grynwald, Albert et al, THOMSON-CSF**
**SCPI 173, Bld Haussmann, F-75379 Paris Cedex 08 (FR)**

### Description

La présente invention concerne une machine électrique, notamment un moteur, à carcasse composite.

Elle vise plus particulièrement une machine électrique qui comprend une carcasse formée d'une virole cylindrique fermée à ses extrémités par des flasques et dans laquelle sont montés concentriquement un stator et un rotor.

Les caractéristiques mécaniques et, dans une certaine mesure, électriques de cette machine électrique sont souvent fonction du centrage du rotor par rapport au stator, c'est-à-dire de l'alignement et du parallélisme des paliers de l'arbre du rotor, supportés par les flasques de cette carcasse.

En vue d'obtenir un bon centrage du rotor, dans la fabrication de telles machines électriques connues, les extrémités de la virole de sa carcasse et la surface d'assemblage des flasques sont soigneusement dressées, et dans la mise en place des paliers du rotor, des cales appelées paillettes de montage sont souvent utilisées.

Ce mode de fabrication des machines électriques est lent et onéreux.

Dans le Brevet US-3 732 616, on a proposé une solution au problème de la mise en perpendiculaire d'un flasque plan de telle sorte que la normale à ce plan soit parallèle à l'axe du rotor. Pour cela, la virole est du côté du flasque, percée d'encoches dont le fond plat sert de surface d'appui à des pattes radiales prolongeant le flasque. Cette solution est reprise par l'invention (voir le préambule de la revendication 1).

Dans le Brevet US-3 463 949, on a proposé une solution au problème du centrage du flasque sur la virole. Pour cela la périphérie de la tôle du flasque est usinée de telle sorte que, sur l'épaisseur de cette tôle, on constitue avec une haute précision une surface cylindrique dont le diamètre est sensiblement égal au diamètre intérieur de la virole. L'invention apporte un perfectionnement notable à cette solution car l'usinage est une opération coûteuse et lente peu propice aux grandes séries de production auxquelles l'invention est adaptée. De plus, les épaisseurs de tôle étant petites relativement aux diamètres des viroles, l'effet de centrage est peu efficace.

Dans le Brevet FR-2 439 496, la solution au problème du centrage est réglée par des excroissances du flasque qui viennent s'appuyer sur la surface intérieure de la virole. Ces excroissances réalisent une forme complexe du flasque.

La présente invention a pour but d'éviter ces inconvénients; elle permet de réaliser économiquement une machine électrique dont le rotor est bien centré par rapport au stator.

Pour assurer la perpendicularité du flasque à l'axe de la virole, cette dernière est munie d'encoches dont les fonds servent d'appuis à des pattes radiales du flasque. La machine électrique, selon l'invention, comprend un stator, un rotor, et une carcasse composite à virole destinée à maintenir en place le stator et deux flasques d'extrémités destinés à supporter les paliers de l'arbre du rotor, la virole étant munie d'encoches dont les fonds servent d'appui pour des pattes radiales des flasques, et des moyens permettant de fixer les flasques à la virole, chaque flasque comportant de part et d'autre de chacune des pattes radiales des parties d'une surface cylindrique de diamètre extérieur sensiblement égal au diamètre d'alésage de la virole et permettant le centrage du flasque par rapport à la virole.

Elle est caractérisée en ce que la surface cylindrique est constituée par des rebords ou bords relevés de la tôle du flasque.

La fixation du flasque à la virole est assurée soit par un soudage du rebord du flasque à la virole, soit par une opération de sertissage consistant à rabattre les pattes du flasque alors en saillie de la surface externe de la virole contre cette surface externe ou encore en ménageant dans la virole des dents de part et d'autre des encoches qui sont rabattues contre les pattes du flasque.

Pour mieux faire comprendre l'invention, on décrit ci-après un certain nombre d'exemples de réalisation illustrés par des dessins ci-annexés dont:

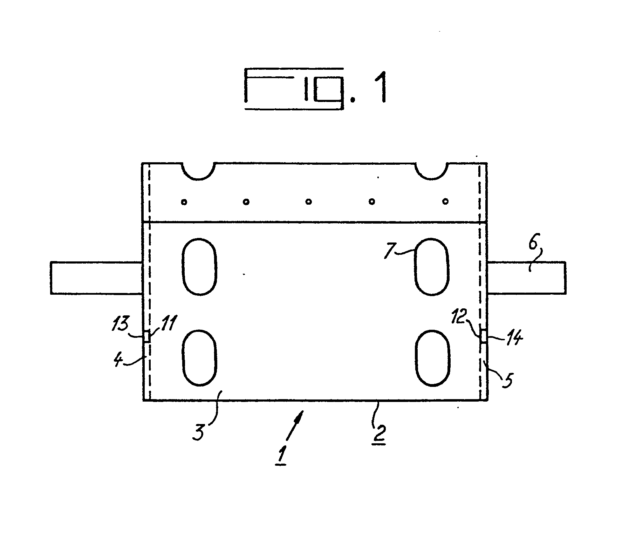

la figure 1 est une vue latérale schématique d'une machine électrique réalisée selon l'invention,

la figure 2 est une vue schématique de face de la caracasse de la machine de la figure 1, montrant un flasque en cours de montage,

la figure 3 est une vue schématique de la virole de la carcasse de la machine de la figure 1, sur son mandrin d'assemblage,

les figures $4_a$, $4_b$ et 5 sont des vues en perspective de variantes de réalisation de la machine électrique de la figure 1,

la figure 6 représente une vue d'une autre variante de réalisation de la machine électrique de la figure 1, et

la figure 7 représente une vue d'une partie d'un bord longitudinal d'un élément préformé de la virole de la carcasse de la machine de la figure 6.

Une machine électrique 1, réalisée selon l'invention, schématiquement illustrée dans la figure 1, comprend une carcasse composite 2 formée d'une virole cylindrique 3 constituée par plusieurs éléments préformés assemblés, et de deux flasques 4, 5 fermant les extrémités de cette virole, un stator ou inducteur et un rotor ou induit, ces derniers étant montés concentriquement dans cette carcasse 2 et les paliers de l'arbre 6 du rotor étant supportés par les flasques 4, 5. La virole 3 présente, au voisinage de ses extrémités, des ouvertures d'aération 7. En variante de telles ouvertures ne sont pas prévues.

Dans la machine électrique 1 selon l'invention la carcasse composite 2 comprend, d'une part, des flasques 4 et 5 ayant, à leur périphérie, des surfaces planes de référence, définissant un plan perpendiculaire à l'axe commun à leur logement central pour un palier du rotor et à leur trou de passage pour l'arbre de ce rotor, et d'autre part une virole 3 ayant au niveau des extrémités de ses éléments préformés, des surfaces planes d'appui recevant, en contact intime de surfaces, les surfaces respectives de référence des flasques 4 et 5.

Ces surfaces planes d'appui sont préalablement disposées lors de l'assemblage de la virole suivant deux plans parallèles perpendiculaires à l'axe longitudinal de cette virole.

Dans l'exemple de réalisation de l'invention, illustré dans les figures 1, 2 et 3, la carcasse composite 2 de la machine électrique 1 comprend une virole 3 constituée par l'assemblage de trois éléments longitudinaux en tôle 8, 9, 10 préformés limités par des génératrices, par exemple $8_a$, $8_b$, du cylindre formant la virole. Chacun de ces éléments comprend à ses deux extrémités, des encoches rectangulaires 11 et 12 dont les fonds plats servent de surface d'appui pour des pattes radiales ou dents du flasque. Dans la virole 3 assemblée, les surfaces planes d'appui se trouvent dans deux plans parallèles, perpendiculaires à l'axe longitudinal 19.

Les flasques 4 et 5, fermant les extrémités de la virole 3, ont une forme générale triangulaire à sommets arrondis et sont pourvus, à leur centre, d'un logement 15 pour un palier du rotor de la machine, et d'un trou 16 pour le passage de l'arbre 6, et à leur périphérie, de pattes (ou dents) radiales 13 et 14 servant de surfaces planes de référence et de moyens de fixation par sertissage et qui sont entourées par des bords relevés 17 (ou rebords) permettant l'emboîtage et le centrage des flasques dans la virole 3, ces rebords 17 ayant un diamètre externe égal au diamètre intérieur de l'alésage de la virole. Dans cet exemple les bords relevés 17 sont tournés vers l'intérieur de la carcasse.

Dans les flasques 4 et 5, les surfaces planes de référence constituées par une face des pattes radiales 13 et 14 définissent des plans perpendiculaires à l'axe commun 18 au logement central 15 pour un palier du rotor et au trou 16 de passage pour l'arbre 6 de ce rotor, et les bords périphériques relevés 17 définissent des parties d'une surface cylindrique concentrique à cet axe 18 et dont le diamètre est égal au diamètre de l'alésage de la virole 3.

Quand on fixe les flasques 4 et 5 sur une telle virole 3, leurs pattes 13 et 14 constituant des surfaces de référence sont respectivement appliquées contre les surfaces d'appui constituées par les fonds plats des encoches rectangulaires 11 et 12 des éléments 8, 9 et 10 de cette virole. Les plans définis par ces pattes 13 et 14 sont alors confondus avec les plans définis par les fonds plats de ces encoches 11 et 12 et deviennent parallèles entre eux et perpendiculaires à l'axe longitudinal 19 de la virole 3. La concentricité du logement 15 du palier et des bords périphériques 17 des flasques 4 et 5, contribue à faire coïncider l'axe 18 de ces logements 15 avec l'axe longitudinal 19 de la virole 3.

On obtient ainsi sans aucun usinage des extrémités de la virole de la carcasse de la machine électrique 1, un bon alignement des paliers du rotor et, par conséquent, un bon centrage du rotor par rapport au stator de la machine, le stator étant maintenu par la virole 3 et le rotor étant supporté par les flasques 4 et 5.

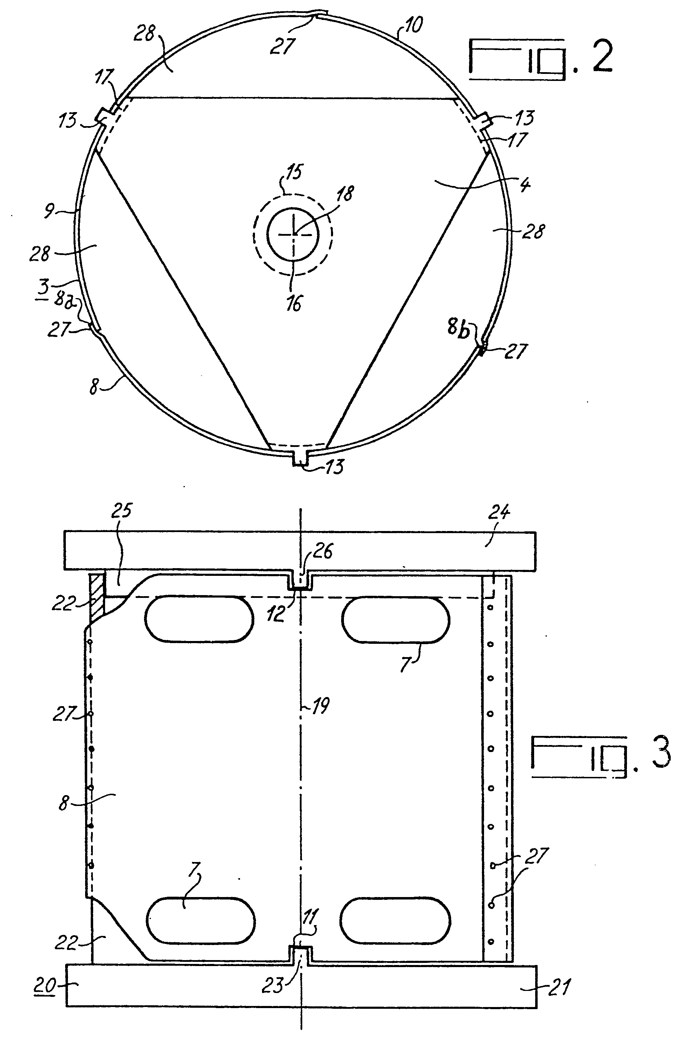

Pour l'assemblage des éléments préformés 8, 9, 10 de la virole 3, on utilise un mandrin de montage 20, formé de deux parties (figure 3). La première partie du mandrin 20 comprend une embase 21 surmontée d'un corps cylindrique 22 dont le diamètre extérieur est pratiquement égal au diamètre extérieur du stator de la machine électrique 1 et au diamètre extérieur des bords périphériques 17 des flasques 4 et 5. La virole 3 assemblée au moyen de ce mandrin permet de recevoir, à frottement dur, le stator, et, à frottement doux, les flasques 4 et 5.

L'embase 21 est pourvue également sur sa surface, autour du corps 22, de bossages radiaux rectangulaires 23 ayant une largeur qui leur permet d'être librement reçus dans les encoches rectangulaires 11 ou 12, et une hauteur plus grande que la profondeur de ces encoches 11 et 12. Les surfaces planes des extrémités de ces bossages 23 définissent un plan perpendiculaire à l'axe du corps cylindrique 22, cet axe étant confondu avec l'axe longitudinal 19 de la virole 3 assemblée sur ce mandrin 20.

La deuxième partie du mandrin 20 comprend une embase 24 prolongée par un corps cylindrique 25 qui peut coulisser concentriquement et à frottement doux dans l'alésage du corps 22 de la première partie 21 du mandrin 20. L'embase 24 est pourvue, sur sa surface, autour du corps 25, de bossages radiaux rectangulaires 26 qui ont les mêmes caractéristiques de dimensions que celles des bossages 23. Les surfaces planes des extrémités de ces bossages 26 définissent un plan perpendiculaire à l'axe du corps cylindrique 25, par conséquent perpendiculaire à l'axe du corps 22. Les deux parties 21, 24 du mandrin 20 sont maintenues serrées l'une contre l'autre (figure 3) au moyen d'un système de serrage connu non représenté. Le système de serrage peut être constitué par une tige axiale filetée (non représentée) montée à travers un trou axial de l'embase 24 et l'alésage du corps 22, et fixée à l'embase 21, et par un écrou (non représenté) permettant, par vissage sur cette tige filetée, un serrage de l'embase 24 contre le corps 22 de l'embase 21.

Pour l'assemblage de la virole 3, les éléments préformés 8, 9, 10 sont montés sur le mandrin 20, appliqués contre le corps cylindrique 22, avec leurs encoches 11 et 12 engagées sur les bossages respectifs 23, 26. Un rapprochement de l'embase 24 de l'embase 21 au moyen d'un système de serrage permet aux bossages 23 et 26 de mettre en position correcte les éléments 8, 9, 10 en forçant les fonds de leurs encoches 11 et 12 à se disposer dans deux plans parallèles entre eux et perpendiculaires à l'axe des corps cylindriques 22 et 25 du mandrin 20, par conséquent à l'axe longitudinal 19 de la virole 3. Les bords longitudinaux en recouvrement de ces éléments 8, 9, 10 maintenus sur le mandrin 20 peuvent être solidement reliés par exemple par des points de soudure 27.

La virole 3 ainsi formée est prête à recevoir le stator, le rotor de la machine et les flasques 4 et 5. Au cours de la fixation des flasques 4 et 5 les pattes radiales 13 de ces flasques sont d'abord intimement appliquées contre les fonds des encoches 11 et 12 de la virole 3, puis soit les bords 17 de ces flasques sont soudés à la virole 3 soit les pattes 13 de ces flasques sont serties en place, c'est-à-dire rabattues contre la surface externe de la virole.

La forme triangulaire des flasques 4 et 5 permet à la carcasse composite 2 de la machine d'avoir à ses extrémités de grandes ouvertures d'aération 28 sans compromettre la rigidité de la machine. Grâce à ces grandes ouvertures 28, les ouvertures d'aération 7 formées dans la virole 3 peuvent, le cas échéant, être supprimées.

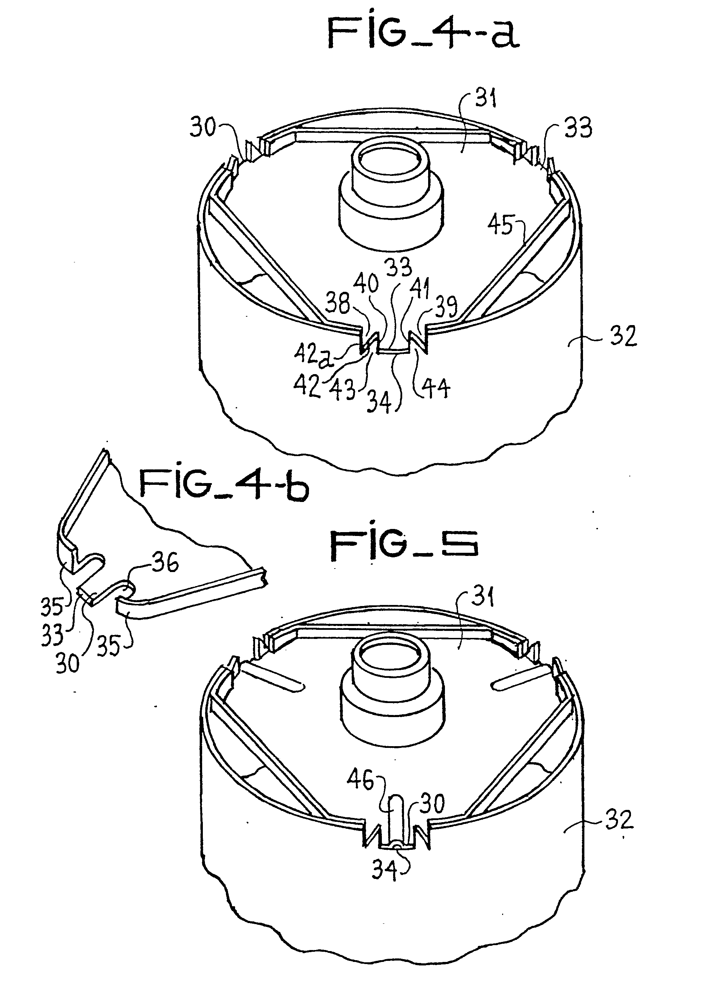

Dans la réalisation représentée sur les figures 4$_a$, 4$_b$ et 5 les pattes radiales 30 de chaque flasque 31 ne sont pas destinées à être rabattues contre la surface extérieure de la virole 32. Le diamètre extérieur du cercle sur lequel se trouvent leurs extrémités 33 n'a ainsi pas besoin d'être plus grand que le diamètre extérieur de la virole 32. Le diamètre de ce cercle est, ainsi, de préférence égal au diamètre de la surface extérieure de ladite virole 32.

Chaque patte 30 s'applique comme dans l'exemple des figures 1 à 3, contre le fond 34 d'une encoche correspondante à l'extrémité de la virole 32, tous les fonds 34 de la même extrémité étant dans un même plan perpendiculaire à l'axe de la virole. Ainsi, la coopération des pattes 30 et des fonds 34 d'encoches permet de disposer les flasques 31 perpendiculairement à l'axe de la virole 32.

Les pattes 30 sont séparées des rebords 35, dont la surface extérieure se trouve sur un cylindre de diamètre égal à celui de l'alésage de la virole 32, par des encoches 36 (figure 4$_b$) qui ne sont pas bordées par de tels rebords 35. Dans cet exemple les rebords 35 sont tournés vers l'extérieur de la carcasse.

La virole 32 présente des échancrures 38, 39 de part et d'autre des arêtes 40, 41 des encoches à fond 34 qui sont parallèles à l'axe de la virole. Chacune de ces échancrures par exemple celle de référence 38 est limitée par une arête oblique 42 partant de l'extrémité libre de l'arête 40 et par une arête 42$_a$ parallèle à l'axe de la virole. Ainsi de chaque côté du fond 34 est formée une dent respective 43, 44 destinée à être rabattue contre la face de la patte 30 correspondante qui est tournée vers l'extérieur.

Les côtés rectilignes du flasque 31 sont dans cet exemple bordés par des rebords 45 prolongeant les rebords 35 et assurant un raidissage de ce flasque.

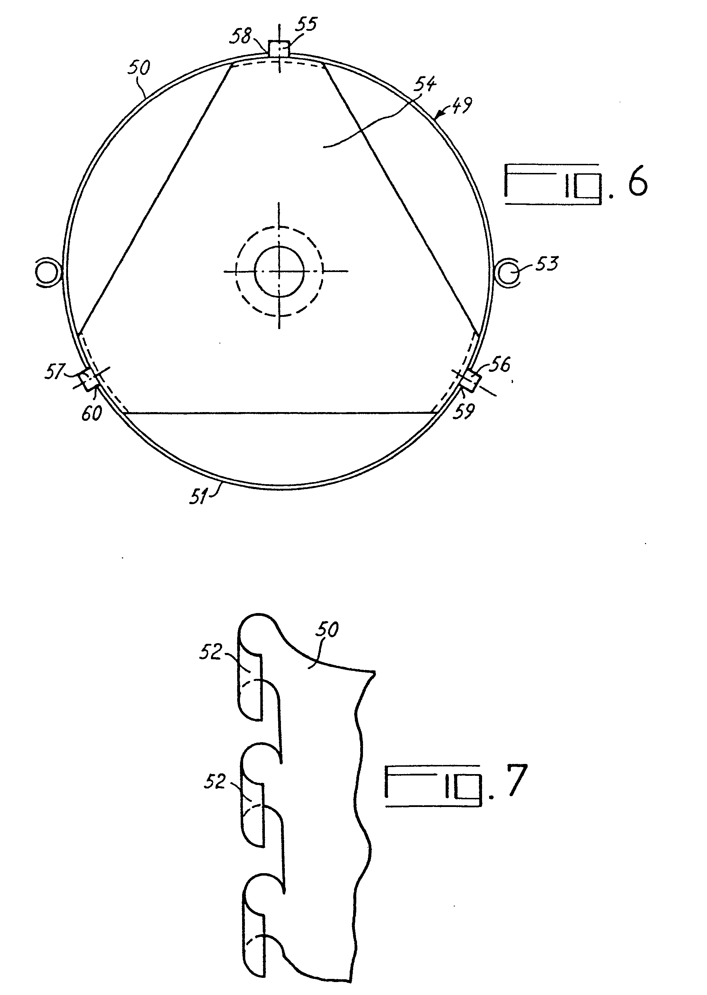

Dans l'exemple de la figure 4$_a$, le flasque 31 est plan dans son ensemble, tandis que dans l'exemple de la figure 5, le flasque 31 présente des nervures radiales 46 s'étendant selon l'axe de symétrie radial de chaque patte 30. Ces nervures sont formées du côté du flasque 31 qui est tourné vers l'extérieur.

Selon une autre variante de réalisation de l'invention illustrée dans les figures 6 et 7, la carcasse composite 49 comprend une virole formée de deux éléments en tôle 50, 51 préformés en portions cylindriques longitudinales dont les bords longitudinaux adjacents sont reliés par agrafage. Ces bords longitudinaux adjacents peuvent avoir par exemple des languettes espacées 52, disposées en imbrication les unes dans les autres et serties par enroulement autour d'une tige 53. Dans cette variante de réalisation les flasques 54 sont analogues à ceux (4 et 5) du premier exemple et comprennent trois pattes radiales 55, 56, 57 servant de surfaces de référence qui sont appliquées contre les surfaces d'appui constituées par les fonds plats des encoches rectangulaires correspondantes 58, 59, 60 des éléments préformés 50 et 51. Dans l'exemple illustré, l'élément 50 comprend à chacune de ses extrémités une encoche rectangulaire 58 tandis que l'élément 51 est pourvu à chacune de ses extrémités, de deux encoches rectangulaires 59, 60.

Selon l'invention, dans la carcasse composite de la machine électrique, la virole peut être constituée par assemblage d'un nombre d'éléments préformés égal ou supérieur à deux, et avoir une section cylindrique ou polygonale tandis que les flasques peuvent avoir également une forme circulaire ou polygonale. La virole peut également être d'une seule pièce.

**Revendications**

1. Machine électrique comprenant un stator, un rotor, et une carcasse composite (2) à virole (3) destinée à maintenir en place le stator et deux flasques d'extrémités (4, 5) destinés à supporter les paliers de l'arbre (6) du rotor, la virole (3) étant munie d'encoches (11, 12) dont les fonds servent d'appui pour des pattes (13, 14) radiales des flasques (4, 5), et des moyens permettant de fixer les flasques (4, 5) à la virole (3), chaque flasque (4, 5) comportant de part et d'autre de chacune des pattes (13) respectivement (14) radiales des parties (17) d'une surface cylindrique de diamètre extérieur sensiblement égal au diamètre d'alésage de la virole (3) et permettant le centrage du flasque (4) respectivement (5) par rapport à la virole (3), caractérisée en ce que la surface cylindrique est constituée par des rebords (17) ou bords relevés de la tôle du flasque (4) respectivement (5).

2. Machine selon la revendication 1, caractérisée en ce que chaque flasque (4, 5) a la forme générale d'un triangle à sommets arrondis, les pattes radiales (13, 14) étant au sommet de chaque triangle et les rebords (17) complétant ces sommets.

3. Machine selon la revendication 1, caractérisée en ce que les rebords (17) sont soudés aux extrémités correspondantes de la virole (3).

4. Machine selon la revendication 1, caractérisée en ce que pour la fixation des flasques (4, 5) à la virole (3) les pattes (13, 14) des flasques (4, 5) forment des languettes rabattables contre la surface extérieure de la virole (3).

5. Machine selon la revendication 1, caractérisée en ce que la virole (32) présente, de part et d'autre des bords longitudinaux des encoches (34), des dents (43, 44) rabattables contre la surface extérieure des pattes (30) pour assurer la fixation du flasque (31) à la virole (32).

6. Machine selon la revendication 1, caractérisée en ce que chaque patte (30) du flasque (31) est munie d'une nervure (46) de raidissement.

7. Machine selon la revendication 1, caractérisée en ce que le flasque (31) présente sur une grande partie de sa périphérie des rebords (45) de raidissement.

8. Machine selon l'une quelconque des revendications précédentes, caractérisée en ce que la virole est formée par l'assemblage de plusieurs éléments préformés dont les arêtes forment des génératrices du cylindre de la virole.

9. Machine selon la revendication 8, caractérisée en ce que les éléments préformés sont assemblés par soudage ou agrafage.

**Claims**

1. Electric motor comprising a stator, a rotor and a composite housing (2) having a sleeve (3) for holding the stator in place and two end flanges (4, 5) for carrying the bearings of the rotor shaft (6), the sleeve (3) being provided with cutouts (11, 12) the bottoms of which are used as supports of radial tabs (13, 14) of the flanges (4, 5), and means permitting the flanges (4, 5) to be fixed to the sleeve (3), each flange (4, 5) comprising, on both sides of each of the radial tabs (13) and (14), respectively, portions (17) of a cylindrical surface having an outer diameter which is substantially equal to the diameter of the bore of the sleeve (3) and permitting the flange (4) and (5), respectively, to be centered with respect to the sleeve (3), characterized in that the cylindrical surface is formed by rims (17) or raised edges of the sheet of the flange (4) and (5), respectively.

2. Machine according to claim 1, characterized in that each flange (4, 5) has the general shape of a triangle with rounded corners, the radial tabs (13, 14) being located at the corners of each triangle and the rims (17) completing these corners.

3. Machine according to claim 1, characterized in that the rims (17) are welded to the corresponding ends of the sleeve (3).

4. Machine according to claim 1, characterized in that, for fixing the flanges (4, 5) to the sleeve (3), the tabs (13, 14) of the flanges (4, 5) form straps adapted to be folded against the outer surface of the sleeve (3).

5. Machine according to claim 1, characterized in that the sleeve (32) has prongs (43, 44) on both sides of the longitudinal edges of the cutouts (34), the prongs being adapted to be folded against the outer surface of the tabs (30) for assuring the flange (31) to be fixed to the sleeve (32).

6. Machine according to claim 1, characterized in that each tab (30) of the flange (31) is provided with a strengthening rib (46).

7. Machine according to claim 1, characterized in that the flange (31) has strengthening rims (45) on the major portion of its periphery.

8. Machine according to any of the preceding claims, characterized in that the sleeve is formed by an assembly of a plurality of preformed members the edges of which form generatrices of the sleeve cylinder.

9. Machine according to claim 8, characterized in that the preformed members are assembled by welding or by folding.

**Patentansprüche**

1. Elektrische Maschine mit einem Stator, einem Rotor und einem zusammengesetzten Gehäuse (2), dessen Mantel (3) zum Festlegen des Stators bestimmt ist und dessen zwei Endschilde (4, 5) zum Tragen der Lager der Welle (6) des Rotors bestimmt sind, wobei der Mantel (3) mit Ausnehmungen (11, 12) versehen ist, deren Böden als Abstützung für radiale Laschen (13, 14) der Schilde (4, 5) dienen, und mit Mitteln zur Befestigung der Schilde (4, 5) an dem Mantel (3), wobei jeder Schild (4, 5) auf beiden Seiten jeder der radialen Laschen (13) bzw. (14) Teile (17) einer zylindrischen Oberfläche umfasst, deren Aussendurchmesser im wesentlichen gleich dem Durchmesser der Bohrung des Mantels (3) ist und welche die Zentrierung des Schildes (4) bzw. (5) in bezug auf den Mantel (3) gestatten, dadurch gekennzeichnet, dass die zylindrische Oberfläche durch umgebogene oder angehobene Ränder (17) des Bleches gebildet ist, aus dem der Schild (4) bzw. (5) gebildet ist.

2. Maschine nach Anspruch 1, dadurch gekennzeichnet, dass jeder Schild (4, 5) die allgemeine Gestalt eines Dreiecks mit gerundeten Ecken besitzt, wobei die radialen Laschen (13, 14) sich an den Ecken jedes Dreiecks befinden und die Ränder (17) diese Ecken vervollständigen.

3. Maschine nach Anspruch 1, dadurch gekennzeichnet, dass die Ränder (17) an den entsprechenden Enden des Mantels (3) angeschweisst sind.

4. Maschine nach Anspruch 1, dadurch gekennzeichnet, dass zur Befestigung der Schilde (4, 5) an dem Mantel (3) die Laschen (13, 14) des Schildes (4, 5) Zungen bilden, welche gegen die Aussenoberfläche des Mantels (3) umgeschlagen werden können.

5. Maschine nach Anspruch 1, dadurch gekennzeichnet, dass der Mantel (32) auf beiden Seiten der Längsränder der Ausnehmungen (34) Zähne (43, 44) aufweist, welche gegen die Aussenoberfläche der Laschen (30) umgeschlagen werden können, um die Befestigung des Schildes (31) an dem Mantel (32) zu gewährleisten.

6. Maschine nach Anspruch 1, dadurch gekennzeichnet, dass jede Lasche (30) des Schildes (31) mit einer Versteifungsrippe (46) versehen ist.

7. Maschine nach Anspruch 1, dadurch gekennzeichnet, dass der Schild (31) auf einem grossen Teil seines Umfanges Versteifungsränder (45) aufweist.

8. Maschine nach einem der vorstehenden Ansprüche, dadurch gekennzeichnet, dass der Mantel durch Zusammenfügung von mehreren vorgeformten Elementen gebildet ist, deren Kanten Mantellinien des Mantelzylinders bilden.

9. Maschine nach Anspruch 8, dadurch gekennzeichnet, dass die vorgeformten Elemente durch Verschweissen oder durch Falzverbindung zusammengefügt werden.

# Fig. 1

Fig. 2

Fig. 3

0 035 938

FIG_4-a

FIG_4-b

FIG_5

11

Fig. 6

Fig. 7